(19)

Europäisches
Patentamt
European
Patent Office
Office européen
des brevets

(11)  EP 3 683 748 A1

(12)  **EUROPEAN PATENT APPLICATION**

(43) Date of publication:
22.07.2020  Bulletin 2020/30

(21) Application number: 20152485.7

(22) Date of filing: 17.01.2020

(51) Int Cl.:
*G06Q 10/10* (2012.01)  *G06Q 30/02* (2012.01)
*G06Q 50/18* (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.01.2019  US 201916250137**

(71) Applicants:
• **Repsol, S.A.**
**28045 Madrid (ES)**

• **International Business Machines Corporation Armonk, New York 10504 (US)**

(72) Inventors:
• **RODRÍGUEZ TORRADO, Rubén**
**E-28935 Móstoles, Madrid (ES)**
• **BHATTACHARJYA, Debarun**
**Yorktown Heights, New York, 10598 (US)**
• **KEPHART, Jeffrey Owen**
**Yorktown Heights, New York, 10598 (US)**

(74) Representative: **ABG Intellectual Property Law, S.L.**
**Avenida de Burgos, 16D**
**Edificio Euromor**
**28036 Madrid (ES)**

(54)  **PRE-VISIT DATA ROOM CONTENT EVALUATION METHOD AND PROGRAM PRODUCT**

(57)  A method of data room content evaluation and a computer program product therefor. Valuation inputs indicate contents expected to be determined in a data room visit. A score range is selected for each valuation input and prior models are elicited. Conditional probabilities for a likelihood model are estimated interactively. Using estimated conditional probabilities the value of a visit or visits are calculated for subsequent analysis. Then, the value of data room visits may be determined by interactively analyzing estimated conditional probabilities.

Fig. 2

**Description**

BACKGROUND OF THE INVENTION

Field of the Invention

The present invention is related to collecting data on a resource of interest, and more particularly to evaluating the contents data characterizing hydrocarbon reservoirs, where the data is stored in a data room, and prior to visiting the data room housing the data.

Background Description

Each hydrocarbon reservoir is located on one or more tracts of land. Each tract of land, also called an exploration block, has an inherent total value that is based on reservoir properties within that block. The inherent value depends on the total amount of material (e.g., oil and gas) that is ultimately recoverable from the reservoir block, offset by the cost of recovering the material or capture difficulty. Experts can estimate that value for exploration blocks from previously collected data and available knowledge. In the oil and gas industry, for example, the resource property owner, or authority, collects data about exploration blocks, and maintains and houses that data in what is known as a data room. There are different types of data rooms, depending upon the host and the available data. A data room may be a physical room, a virtual room, or a data center. Usually data room are secure or privileged, i.e., secret. The host may be a private company or a government. A traditional secure data room may be physically, continually monitored, normally in the vendor's offices or another secure location.

In the oil and gas industry, the available data may be just reports or include seismic information and exploration well information. Interested oil and gas production companies have teams that visit one or more data room(s) to obtain more information about exploration blocks of interest. Normally, each time the production company sends observers to analyze onsite whatever data is available in the room(s), apart from inconvenience of associated displacement and further expenses for that visit, data room hosts charge an entry fee normally under pre-payment. Thus, each production company must decide which exploration blocks to pursue, and then determine whether visiting the data room is worthy. Whenever there are multiple data rooms, or possibly, different exploration blocks of potential interest, the production company must decide which data room(s) is/are worth the travel and expenses.

Thus, there is a need to minimize the number of access to a data room, particularly by determining the cost of visiting such data room prior to entry, and more particularly, by deciding which data rooms to visit to maximize the potential value of any exploration block information that may be obtained, before paying any entry fee(s).

SUMMARY OF THE INVENTION

A feature of the invention is minimizing the number of visits to a data room by accounting the information to be recovered in such data room prior to an actual visit.

Another feature of the invention is the ability to study the relevance of the information contained in data rooms with regard to hydrocarbon reservoirs under consideration for exploitation prior to actual data room visits by hydrocarbon company representatives.

Yet another feature of the invention is the ability of oil companies to estimate what might be the relevance of the information from any particular data room visit, prior to actually visits to the data rooms, allowing the companies to avoid potentially costly, unfruitful visits.

The present invention relates to a method of data room content evaluation and a computer program product therefor. Valuation inputs indicate contents expected to be determined in a data room visit. A projected content range is selected for each valuation input and prior models are elicited. Conditional probabilities for a likelihood model are estimated, preferably interactively. Using estimated conditional probabilities the value of a visit or visits are calculated for subsequent analysis. Then, the value of data room visits may be determined by analyzing estimated conditional probabilities, preferably interactively.

BRIEF DESCRIPTION OF THE DRAWINGS

The foregoing and other objects, aspects and advantages will be better understood from the following detailed description of a preferred embodiment of the invention with reference to the drawings, in which:

Figure 1 shows an example of a content evaluation system for pre-evaluating advantages of visits to data rooms in determining the potential value of information (VOI) of available data housed therein, according to a preferred embodiment of the present invention;

Figure 2 shows an example of a company agent evaluating advantages of visits to data rooms in determining the potential value of available data;

Figure 3 shows an example of a GUI window for selecting from the geological features set and projecting content ranges for each selected feature;

Figure 4 shows an example of a prior model elicitation GUI window for estimating probabilities for projected feature content values;

Figure 5 shows an example of a GUI window for estimating conditional probabilities for the feature results projected for the likelihood model;

Figure 6 shows an example of calculating the value of a visit or visits;

Figure 7 is an example of a GUI window showing VOI calculation results and interactive parameter sensitivity plots for interactive analysis.

## DESCRIPTION OF PREFERRED EMBODIMENTS

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

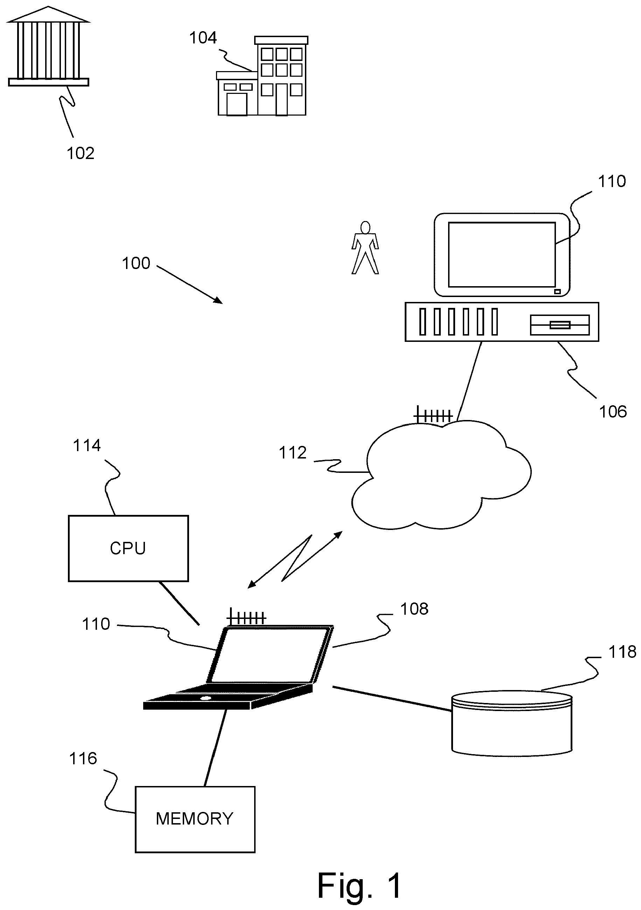

Turning now to the drawings and more particularly, Figure 1 shows an example of a content evaluation system 100 for pre-evaluating advantages of visits to data rooms 102, 104 in determining the potential value of information (VOI) of available data housed therein, according to a preferred embodiment of the present invention. Each data room 102 104 may include, for example, technical reports about the properties of one or more exploration blocks and neighboring tracts, initial seismic surveys, exploration well data, and anything else that may be available. Also, the host may charge different fees to access to different types of data and/or different blocks. A preferred system 100 uses all available information, e.g., collected from other, previously explored reservoirs, and expert opinion. From this a preferred system 100 may assist a company (e.g., an oil and gas company) through one or more representatives or agents in determining advantages attributable to visiting each of the one or more data rooms 102 104 a priori, before actually visiting any of the data rooms 102 104.

Evaluation inputs to the system 100 may include, for example, initial probabilistic assessments of reservoir features, reservoir properties, potential measurements, and any other features that may be observed and scored in the data room(s) 102 104 to be evaluated. From these sources the system 100 determines the value to the company of visiting each data room for each data block. This is especially useful where a company may have multiple potential blocks and multiple data rooms available to visit. From the evaluation results the company can make an informed selection of which data room(s) 102 104 to visit for a particular exploration block prior to the visit, and prior to paying the appurtenant fee. Typically, company agents may be experts. It is understood that agent, agents, expert and experts are used interchangeably herein to represent whomever a particular company selects or retains for deciding which data room(s) and/or block(s) to visit.

In this example the system 100 includes two (2) input devices, e.g., computers 106, 108, for company agents to input available data room information and assessment requirements and to receive assessment results of VOI of data potential room visits. The input devices 106, 108 may include integrated and/or connected displays 110. The input devices 106, 108 may be coupled to, and communicate wired or wirelessly with, each other over a network 112, e.g., a local area network (LAN), the Internet, an intranet, or a combination or hybrid thereof. Typically, the input devices 106, 108 also include one or more processors, e.g., central processing unit (CPU) 114 and memory 116 and some local storage 118.

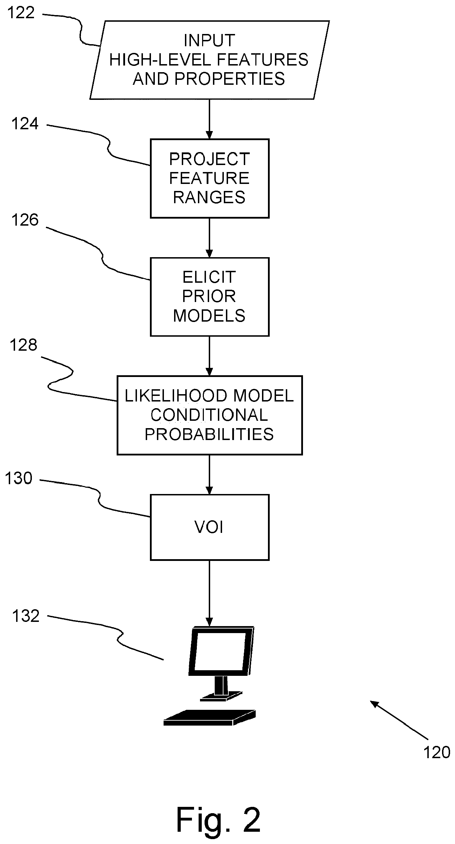

Figure 2 shows an example 120 of a company evaluating (e.g., through one or more agents) advantages of visits to data rooms (e.g., 102, 104 in Figure 1) in determining the potential value of available data in the data room(s). Evaluation begins with the company agent(s) entering data room valuation inputs 122 at one or more of the input devices 106, 108, e.g., using a typical graphical user interface (GUI). Then, the company agent projects 124 ranges representing the content expected for selected inputs. Prior model elicitation 126 provides probabilistic models that the system 100 uses to estimate 128 conditional probabilities for a likelihood model. Based on the estimated conditional probabilities, the system 100 calculates 130 the VOI of a visit or visits for further analysis 132, e.g., by the agent.

The GUI may include a welcome page or window, e.g., displayed on display 110 that presents that introduces terminology and lists high-level features and properties. Typical valuation inputs include geological features, average geometric properties, average petro-physical properties and economic assumptions. Geological features ($F$) are treated as a set of binary variables, e.g., a yes or no. Geometric properties, petro-physical properties and economic assumptions are all quantifiable parameters, and may be provided as a value within a range, e.g., $X_0 \pm x$.

The binary geological features in the set ($F$) may indicate, for example, the presence or absence of: source rock ($SR$); reservoir rock ($RR$); and/or a trap or traps ($Tr$). Also, as described hereinbelow, geological features may also include whether migration ($M$) or timing ($Ti$) suitable for hydrocarbon accumulation has occurred. Preferably, average geometric properties include average reservoir area ($A$) and height ($h$). Preferred average petro-physical properties may include average porosity ($\varphi$), average net-to-gross ($NTG$) and average oil saturation ($s_0$), as well as a fluid volume factor ($B_0$) and a recovery factor ($\eta$). Preferred economic assumptions include the price of oil ($OP$), e.g., per cubic meter ($m^3$) and total cost ($C$).

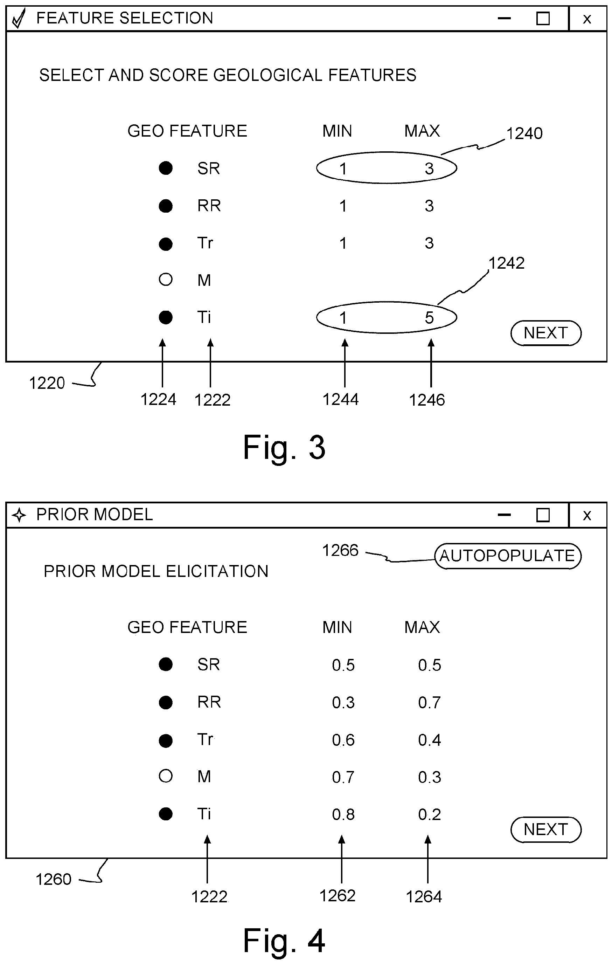

Figure 3 shows an example of a GUI window 1220 for entering inputs 1222 (in 122 in Figure 2), e.g., selecting geological features from the feature set, $F = \{SR, RR, Tr, M, Ti\}$. For a particular reservoir or block a typical data room can include information on any or all of these geological features. So for this example, the company agent can indicate an expectation of the presence of a particular geological feature, or of the occurrence of a condition, simply by checking in a column 1224 provided for selection next to each feature 1222. The absence of a checkmark is a "no" response for the respective feature 1222.

Further, each of these binary variables may be associated with a score range that represents results likely to be observed in the data room for that the respective feature 1222. So, the company agent or agents may project content ranges 1240, 1242 for each selected feature, preferably as a pair of integer scores (min, max) 1244, 1246 that represents a range of expected data room results. Preferably, the feature ranges 1240, 1242 are projected from expert deliberation about all available evidence for the data room currently being considered. As an example, the projected content range 1242 ranges from 0 - 5, where 5 indicates is likely to find substantial evidence, and 0 very little or no evidence is likely. Estimates or, if known, actual scores are applied to geometric properties, petro-physical properties and economic assumptions. Preferably, the project ranges 1240, 1242 are selected to adequately capture the diversity of degrees of evidence conceivably found for each respective, selected feature 1222.

Figure 4 shows an example of a GUI window 1260, for eliciting prior models 126 in Figure 2, e.g., applying what is known in the art as "expert elicitation" to similar or analogous reservoirs. Essentially, prior model elicitation 126 provides an analysis baseline from probabilistic models supplied by the company. The company agent, or optionally, the system, estimates 126 a probability 1262, 1264 for each state (yes/no) for each geological feature 1222, as well as for other properties, i.e., petro-physical and geometric properties. Preferably, the models include an inclusive or joint probability model of all geological features, e.g., $P(SR, RR, Tr, M, Ti)$. Preferably also, the models include an inclusive or joint probability model of all physical and geometric properties as well as economic assumptions. Optionally, instead of probabilities for point estimates, the agent may provide lower and upper probability bounds for each variable. Otherwise, the preferred system can auto-populate 1266 input probabilities 1262, 1264, e.g., based on available analogous reservoir statistics. Once auto-populated, the company agent may selectively edit the results.

Typically, the company agent bases probability estimates 126 on any available, currently-possessed probability distributions and information. For example, basin database/reports can contain extractable geological feature distributions. Reservoir analogues may also provide database information about reservoirs similar to the reservoir under consideration.

For each particular feature the conditional probabilities estimated in (128 in Figure 2) for the likelihood model quantifies the agent's beliefs/understanding of the type and quality of the data expected to be in the data room. The quality reflects how well the likelihood model predicts which geological features the agent expects to observe in the data room. So, these probabilities reflect that some features may be easier to spot than others. Also, the type of available data is reflected in the probabilities, e.g., any seismic data available with a geological report may make some features easier to identify. The agent may also take into account data reliability where, for example, the agent does not fully trust the data room company.

For example, for the existence of traps (Tr), the likelihood model reflects the probability, $p(Tr'|Tr)$, that each score will be the actual score (Tr') observed in the data room, i.e., whether or not a trap is present. So for "perfect" data for example, $p(Tr'=5 \mid Tr=1) = 1$ and $p(Tr'=0 \mid Tr=0) = 1$. This indicates that the data room information is always the highest score if there truly is a trap, and always the lowest score if there is no trap.

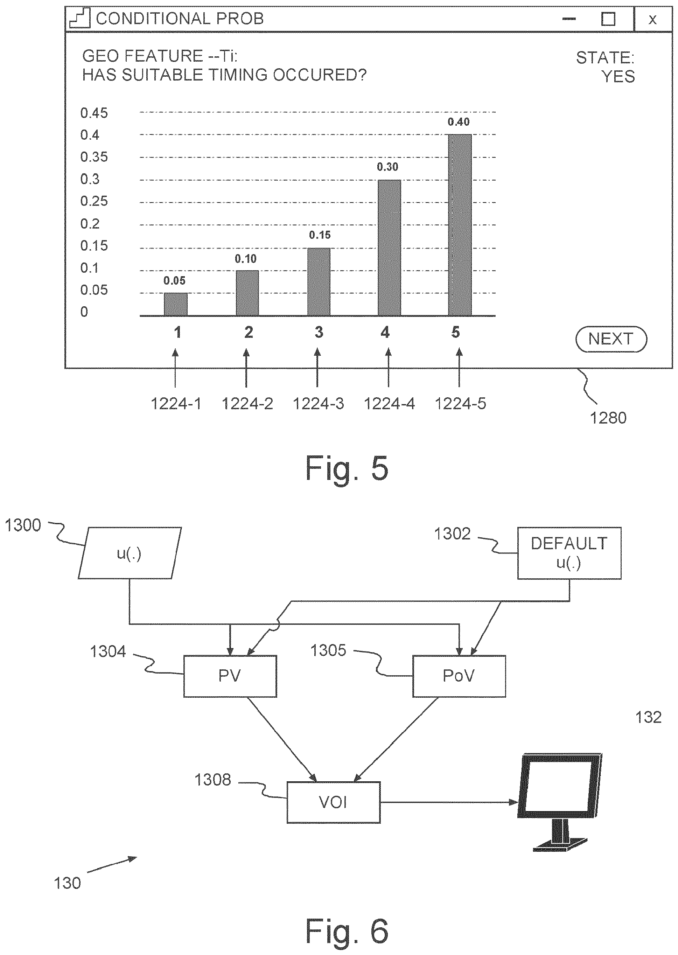

Figure 5 shows an example of a GUI window 1280 for estimating conditional probabilities (128 in Figure 2) for the feature results projected (1240, 1242 of Figure 3) for the likelihood model. For the timing variable (Ti) for example, for the feature state *yes* the projected (from prior evidence) content range 1242 is one to five, 1 - 5. In this window 1280 the company agent drags otherwise shifts one or more of the respective probability bars 1242-1, 1242-2, 1242-3, 1242-4, 1242-5, to set conditional probabilities $p(Ti'|Ti)$ for each score with the sum of the probabilities being 1.00 or 100%. This probability estimate for one feature state possibility (in this example *yes*) is followed by estimating the conditional probabilities with the other feature state possibility, *no.*

Figure 6 shows an example of the system 100 calculating 130 the value of a visit or visits. The agent may provide 1300 the system 100 with a utility function $(u(.))$, preferably linear or exponential, representing monetary risk preferences. Otherwise, the system 100 defaults 1302 to a pre-selected linear utility function such as are well known in the art. Preferably also, the default assumption is that the primary value of the data room arises from obtaining more information about the high-level geological features. The system 100 uses the model to generate 1304 a prior value *(PV),* i.e., a baseline estimate of the oil revenue derived while considering the agent's estimates 126. Then, the system 100 also uses the likelihood model to generate 1306 a posterior value *(PoV),* i.e., the expected value of the oil revenue information from a visit based on the estimates 126, 128. With a linear or exponential utility function, the VOI 1308 is the difference between the prior value and the posterior value (VOI = PoV - PV), which the system displays 132 as the value of the data room information.

The system 100 determines revenue (R) from oil, if oil is indeed present (i.e. if all the geological features are present), as a function of the average petro-physical properties, average geometric properties and economic assumptions with the form $R = ( A^*h^*\phi^*NTG^*s_0^*(1/B_o)j^*OP^* \eta)$. Without additional information from or about the data room, the system 100 determines the probability (P(F)) that oil is present from $P(\textbf{F}) = P(SR)^*P(RR)^*P(Tr)^*P(M)^*P(Ti)$. So then, the system 100 generates 1304 the baseline value, i.e., prior to access to measurements/scores of geological features and without information from the data room, from

$$PV = u^{-1}\left[\max\left\{P\big(\textbf{F}\big).\left(\int_{dR} u\big(R - C\big)dR\right) + \big(1 - P\big(\textbf{F}\big)\big).u\big(-C\big), u\big(0\big)\right\}\right]$$, where $u^1(.)$ is the inverse utility function, and $dR = (dA^*dh^*d\phi^*dNTG^*ds_0^*dB_o^*d\eta)$. The expression inside the maximization (max{}) represents the two alternatives - to buy or not to buy the block under consideration. Preferably, the system 100 uses Monte Carlo sampling to approximate $\int_{dR} u\big(R - C\big)dR$ .

In a simple numerical example with a risk-neutral (i.e., linear) utility function, the agent provides petro-physical properties, geometric properties and economic assumptions modeled as constants (i.e., as deterministic variables) for potential data room visit for a particular exploration block. From those properties and assumptions for this example, and provided that all the geological features are favorable and with the cost of developing the block of ten million dollars ($10M), the calculated revenue (R) from the field is one billion dollars ($1B). Also for this example, instead of checking (selecting) multiple high-level geological features (122 and 124 in Figure 2), the agent only selects traps (Tr), indicating a visit is expected to yield information on the existence of traps with the likelihood categorized as high (H), medium (M), or low (L). The agent also indicates *a priori* information of high-level geological features 126 as P(SR) = P(RR) = P(M) = 0.5; P(Tr) = 0.2; P(Ti) = 0.1.

For this example, the likelihood model representing expectations of the type and reliability of the trap data to be found in the data room: for yes is P(Tr'=L|Tr=1) = 0.0, P(Tr'=M|Tr=1) = 0.2, and P(Tr'=H|Tr=1) = 0.8; and, for no is P(Tr'=L|Tr=0) = 0.8, P(Tr'=M|Tr=0) = 0.2, and P(Tr'=H|Tr=0) = 0.0. It follows that the prior value 1304 for this visit is *PV* = max {(0.0025*990)+(0.9975*-10), 0}=max{-7.5,0} = 0. Since the prior value 1304 is zero, the agent would tend to decide to decline developing the block, if that decision were just based on these *a priori* results. However, determining the VOI requires more than just prior results 1304.

Generating a posterior value 1306 begins with the data measurement scores, $\textbf{F'} = \{SR',RR',Tr',M',Ti'\}$, and applying Bayesian updating to the previously obtained probability (P(F)) that oil is present. This generates a pre-posterior probability $P(\textbf{F'})=P(SR')^*P(RR')^*P(Tr')^*P(M')^*P(Ti')$ and posterior probability $P(\textbf{F}|\textbf{F'})$ = $P(SR|SR')^*P(RR|RR')^*P(Tr|Tr')^*P(M|M')^*P(Ti|Ti')$, where $\textbf{F} = \{SR,RR,Tr,M,Ti\}$. From this the posterior value 1306,

$$PoV = u^{-1}\left[\sum_{\textbf{F'}}\left(P\big(\textbf{F'}\big).\max\left\{P\big(\textbf{F}\mid\textbf{F'}\big).\left(\int_{dR} u\big(R - C\big)dR\right) + \big(1 - P\big(\textbf{F}\mid\textbf{F'}\big)\big).u\big(-C\big), u\big(0\big)\right\}\right)\right]$$

reflects the value of using the information from the data room. Thus, the PoV is the sum (or integration) over all possible measurements that could potentially be made. Again preferably, the system 100 uses Monte Carlo sampling to approx-

imate $\int_{dR} u\big(R - C\big)dR$ .

So, continuing the above simple example, Bayesian updating results in pre-posterior probabilities: P(Tr'=L) = 0.72, P(Tr'=M) = 0.2, and P(Tr'=H) = 0.08; and, posterior probabilities: P(Tr=1|Tr'=L) = 0, P(Tr=1|Tr'=M) = 0.1, and P(Tr=1|Tr'=H) = 1. From these pre-posterior and posterior probabilities, the system generates the posterior value:

$$PoV = (0.72^*0) + (0.2^*0) + (0.8 * \max\{(0.025 * 990) + (0.975 * -10), 0\})$$

$$= 0.8 * \max \{15, 0\}$$

$$= 12.$$

Further, VOI = PoV - PV = 12 - 0 = $12M.

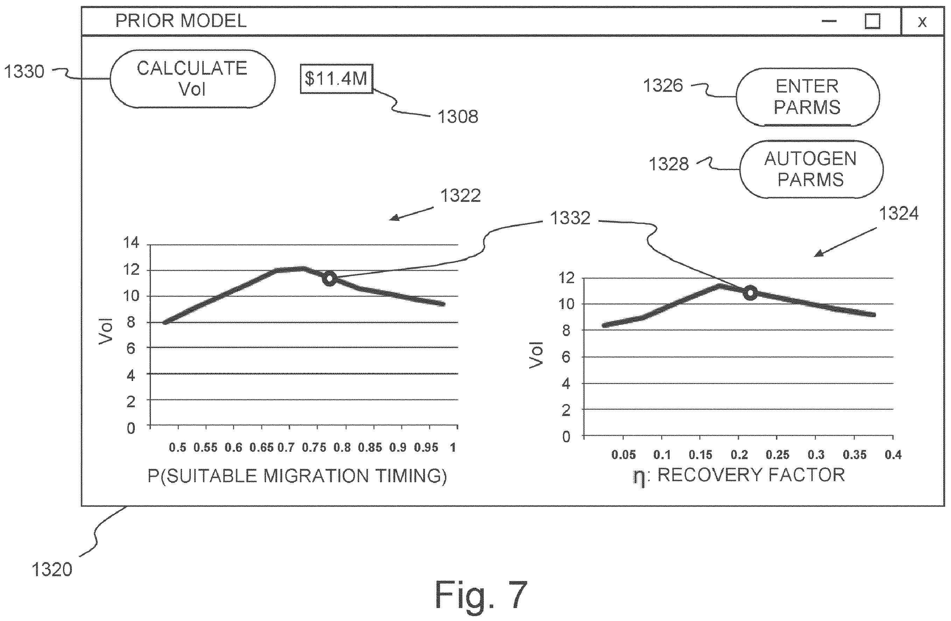

Figure 7 shows an example of a GUI window 1320 graphically displaying VOI results 1308 and, in this example, a pair of interactive parameter sensitivity plots 1322, 1324 for further analyzing VOI sensitivities. The plots of this example show VOI as a function of migration timing probability 1322 and, as a function of recovery factor ($\eta$) 1324. The company

agent can manually enter 1326 parameter estimates, or optionally, have the system generate estimates automatically 1328. The system generates the sensitivity plots 1322, 1324 by calculating 1330 at the current data point 1332.

The monetary VOI amount 1308 estimates the value of visiting the current data room and whether or not it is worth visiting the data room. In subsequent analysis 132 the company agent uses these sensitivity plots 1322, 1324 to analyze potential VOIs 1308 for deciding whether a visit or visits to the respective data room will be sufficiently fruitful to repay any entry fee. Further, the data room VOI can be compared with the VOI for visits to various data rooms and exploration blocks.

Thus advantageously, the preferred system allows interested companies to reduce the number of visits or even refuse it by estimating the VOI of visiting a data room to obtain more information about an exploration block before entering the room, even for data rooms that have no historical precedent. Moreover, the present invention has application to reducing the inherent complexity given the intractable number of variables and assumptions involved in the estimation. A preferred system leverages human judgment, e.g., from a company agent, to assimilate and synthesize many low-level measurements into simple information variables. The preferred system then applies mathematical formalism of VOI to those probability estimates to project a value for deciding whether to go forward with a data room visit or visits.

While the invention has been described in terms of preferred embodiments, those skilled in the art will recognize that the invention can be practiced with modification within the scope of the appended claims. It is intended that all such variations and modifications fall within the scope of the appended claims. Examples and drawings are, accordingly, to be regarded as illustrative rather than restrictive.

**Claims**

1.  A method of data room content evaluation, said method comprising:

    entering valuation inputs, said valuation inputs indicating expected contents to be determined in a visit to a data room;
    projecting content ranges for selected valuation inputs;
    eliciting prior models;
    estimating conditional probabilities for a likelihood model;
    generating a projected value of a visit or visits for analysis responsive to said estimated conditional probabilities; and
    analyzing estimated conditional probabilities to determine the value of data room visits.

2.  A method as in claim 1, wherein generating the projected value of said visit comprises:

    selecting a utility function u(.);
    generating a prior value (PV) of information based on currently available information, available prior to said data room visit;
    generating a posterior value (PoV), the expected value of information available after said data room visit; and
    determining the difference between said prior value and said posterior value, said difference indicating an estimate of the value of information (VOI) obtained from visiting said data room.

3.  A method as in claim 1 or 2, wherein said valuation inputs include geological features, geometric properties, petro-physical properties and/or economic assumptions.

4.  A method as in any of previous claims, wherein:

    said geological features (F), when present, are binary variables comprise source rock (SR) reservoir rock (RR), at least one trap (Tr), suitability to migration (M) and the occurrence of suitable timing (Ti), where $F = \{SR, RR, Tr, M, Ti\}$;
    said geometric properties, when present, comprise average reservoir area (A) and height (h);
    said petro-physical properties, when present, comprise averages of porosity ($\varphi$), net-to-gross (NTG) and oil saturation (so), as well as a fluid volume factor (Bo) and a recovery factor ($\eta$); and
    said economic assumptions, when present, comprise price of oil (OP) and total cost (C).

5.  A method as in any of previous claims, wherein for each selected said geological feature projected said content ranges indicate a range (min, max) of likely observed results $F' = \{SR', RR', Tr', M', Ti'\}$ for the respective said selected geological feature F.

6. A method as in any of previous claims, wherein eliciting said prior models comprises providing a probability P(SR), P(RR), P(Tr), P(M), P(Ti) for each projected geological feature result.

7. A method as in any of previous claims, wherein $R = (A*h*\phi*NTG*s_0*(1/B_o)*OP*\eta)$ is the revenue from oil; and $P(F) = P(SR)*P(RR)*P(Tr)*P(M)*P(Ti)$ is the probability $(P(F))$ that oil present.

8. A method as in any of previous claims, wherein said prior value is generated from

$$PV = u^{-1}\left[\max\left\{P(F).\left(\int_{dR} u(R-C)dR\right)+(1-P(F)).u(-C),u(0)\right\}\right]$$, where $u^1(.)$ is the inverse of said utility function, and $dR = (dA*dh*d\phi*dNTG*ds_0*dB_o*d\eta)$.

9. A method as in claim 7 and any of claims 1 to 8, wherein Bayesian updating is applied to said probability $(P(F))$ that oil is present, Bayesian updating generating a pre-posterior probability, $P(F') = P(SR')*P(RR')*P(Tr')*P(M')*P(Ti')$, and a posterior probability

$$P(F\,|\,F') = P(SR\,|\,SR')*P(RR\,|\,RR')*P(Tr\,|\,Tr')*P(M\,|\,M')*P(Ti\,|\,Ti').$$

10. A method as in any of previous claims, wherein

$$PoV = u^{-1}\left[\sum_{F'}\left(P(F').\max\left\{P(F\,|\,F').\left(\int_{dR} u(R-C)dR\right)+(1-P(F\,|\,F')).u(-C),u(0)\right\}\right)\right]$$

is said posterior value.

11. A computer program product for evaluating data room content prior to visiting the data room, said computer program product comprising a non-transitory computer usable medium having computer readable program code stored thereon, said computer readable program code causing a plurality of computers executing said code to:

   receive valuation inputs, said valuation inputs indicating expected contents to be determined in a visit to a data room;
   receive projected content ranges for selected valuation inputs;
   elicit prior models;
   receive conditional probability estimates for a likelihood model;
   generate a projected value of a visit or visits for analysis responsive to the estimated conditional probabilities; and
   display said estimated conditional probabilities for analyzing, preferably interactively, said projected value to determine the value of data room visits.

12. A computer program product for evaluating data room content prior to visiting the data room as in claim 11, wherein said computer readable program code causing said one or more computers to generate the visit projected value causes said one or more computers to:

   select a utility function u(.);
   generate a prior value (PV) reflecting a value of information based on currently available information, available prior to said data room visit;
   generate a posterior value (PoV) reflecting the expected value of information available after said data room visit; and
   determine the difference between said prior value and said posterior value, said difference indicating an estimate of the value of information (VOI) obtained from visiting said data room.

13. A computer program product for evaluating data room content prior to visiting the data room as in claim 11 or 12, wherein said valuation inputs include geological features, geometric properties, petro-physical properties and economic assumptions, wherein:

said geological features (F) are binary variables comprise source rock (*SR*) reservoir rock (RR), at least one trap (Tr), suitability to migration (M) and the occurrence of suitable timing (Ti), where F = {*SR, RR, Tr, M, Ti*};
said geometric properties comprise average reservoir area (A) and height (h);
said petro-physical properties comprise averages of porosity ($\varphi$), net-to-gross (NTG) and oil saturation (so), as well as a fluid volume factor (Bo) and a recovery factor ($\eta$); and
said economic assumptions comprise price of oil (OP) and total cost (C).

**14.** A computer program product for evaluating data room content prior to visiting the data room as in any of claims 11 to 13, wherein for each selected said geological feature, received said projected content ranges indicate a range (min, max) of likely observed results *F' = {SR', RR', Tr', M', Ti'}* for the respective said selected geological feature F.

**15.** A computer program product for evaluating data room content prior to visiting the data room as in any of claims 11 to 14, wherein said computer readable program code causing said one or more computers to elicit said prior models causes said one or more computers to receive a probability P(SR), P(RR), P(Tr), P(M), P(Ti) for each projected geological feature result.

**16.** A computer program product for evaluating data room content prior to visiting the data room as in any of claims 11 to 15, further causing said one or more computers to determine the revenue from oil from $R = (A*h*\phi*NTG*s_0*(1/B_o)*OP*\eta)$ ; and the probability that oil present from *P(**F**)=P(SR)\*P(RR)\*P(Tr)\*P(M)\*P(Ti)*.

**17.** A computer program product for evaluating data room content prior to visiting the data room as in any of claims 11 to 16, wherein said computer readable program code causing said one or more computers to generate said prior value is from $PV = u^{-1}\left[\max\left\{P(\boldsymbol{F}).\left(\int_{dR} u(R-C)dR\right)+\left(1-P(\boldsymbol{F})\right).u(-C), u(0)\right\}\right]$, where $u^1(.)$ is the inverse of said utility function, and $dR = (dA*dh*d\phi*dNTG*ds_0*dB_o*d\eta)$.

**18.** A computer program product for evaluating data room content prior to visiting the data room as in any of claims 11 to 17, further causing said one or more computers to apply Bayesian updating to generate a pre-posterior probability, *P(**F'**) = P(SR')\*P(RR')\*P(Tr')\*P(M')\*P(Ti')*, and a posterior probability

$$P\left(\boldsymbol{F}\,|\,\boldsymbol{F'}\right)=P\left(SR\,|\,SR'\right)*P\left(RR\,|\,RR'\right)*P\left(Tr\,|\,Tr'\right)*P\left(M\,|\,M'\right)*P\left(Ti\,|\,Ti'\right).$$

**19.** A computer program product for evaluating data room content prior to visiting the data room as in any of claims 11 to 18, said computer readable program code causing said one or more computers to generate said posterior value, determines

$$PoV = u^{-1}\left[\sum_{F'}\left(P(\boldsymbol{F'}).\max\left\{P(\boldsymbol{F}\,|\,\boldsymbol{F'}).\left(\int_{dR} u(R-C)dR\right)+\left(1-P(\boldsymbol{F}\,|\,\boldsymbol{F'})\right).u(-C), u(0)\right\}\right)\right]$$

as said posterior value.

**20.** A computer program product for evaluating data room content prior to visiting the data room as in any of claims 11 to 19, wherein said computer readable program code causing said one or more computers to determine said prior value and said posterior value, cause said one or to approximate the maximization $\int_{dR} u(R-C)dR$ with Monte Carlo sampling.

Fig. 1

122 ◦ INPUT
HIGH-LEVEL FEATURES
AND PROPERTIES

124 ◦ PROJECT
FEATURE
RANGES

126 ◦ ELICIT
PRIOR
MODELS

128 ◦ LIKELIHOOD MODEL
CONDITIONAL
PROBABILITIES

130 ◦ VOI

132 ◦

120

## Fig. 2

FEATURE SELECTION      — □ x

SELECT AND SCORE GEOLOGICAL FEATURES

| GEO FEATURE | | MIN | MAX |
|---|---|---|---|
| ● | SR | 1 | 3 | 1240 |
| ● | RR | 1 | 3 |
| ● | Tr | 1 | 3 |
| ○ | M | | |
| ● | Ti | 1 | 5 | 1242 |

NEXT

1220

1224  1222  1244  1246

# Fig. 3

PRIOR MODEL      — □ x

1266 — AUTOPOPULATE

PRIOR MODEL ELICITATION

| GEO FEATURE | | MIN | MAX |
|---|---|---|---|
| ● | SR | 0.5 | 0.5 |
| ● | RR | 0.3 | 0.7 |
| ● | Tr | 0.6 | 0.4 |
| ○ | M | 0.7 | 0.3 |
| ● | Ti | 0.8 | 0.2 |

NEXT

1260

1222  1262  1264

# Fig. 4

CONDITIONAL PROB — □ X

GEO FEATURE --Ti:
HAS SUITABLE TIMING OCCURED?

STATE:
YES

0.45
0.4
0.35
0.3
0.25
0.2
0.15
0.1
0.05
0

0.05   0.10   0.15   0.30   0.40

1   2   3   4   5

NEXT

1224-1   1224-2   1224-3   1224-4   1224-5

1280

## Fig. 5

1300   u(.)

1302   DEFAULT u(.)

1304   PV

1305   PoV

132

1308   VOI

130

## Fig. 6

Fig. 7

Europäisches
Patentamt

European
Patent Office

Office européen
des brevets

# EUROPEAN SEARCH REPORT

Application Number

EP 20 15 2485

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/198817 A1 (DHIR RAHUL [GB]) 26 December 2002 (2002-12-26) * abstract * * paragraph [0123] * * paragraphs [0133] - [0138]; figures 2, 24, 25 * ----- | 1-20 | INV. G06Q10/10 G06Q30/02 G06Q50/18 |
| X | US 2013/054304 A1 (STROM STEVEN R [US]) 28 February 2013 (2013-02-28) * abstract * * paragraphs [0007] - [0013] * * paragraphs [0086], [0091], [0092] * ----- | 1-20 | |
| A | P MIREAULT ET AL: "Reservoir Engineering for Geologists", CSPG RESERVOIR MAGAZINE, 23 July 2018 (2018-07-23), pages 1-57, XP055557148, * abstract * * Article 3 * ----- | 1-20 | |

TECHNICAL FIELDS
SEARCHED        (IPC)

G06Q

The present search report has been drawn up for all claims

| Place of search | Date of completion of the search | Examiner |
|---|---|---|
| Munich | 26 March 2020 | Dedek, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 2485

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2020

| Patent document cited in search report | | Publication date | Patent family member(s) | | Publication date |
|---|---|---|---|---|---|
| US 2002198817 | A1 | 26-12-2002 | AU 2002303116 A1 | | 24-09-2002 |
| | | | EP 1384186 A2 | | 28-01-2004 |
| | | | US 2002198817 A1 | | 26-12-2002 |
| | | | WO 02073349 A2 | | 19-09-2002 |
| US 2013054304 | A1 | 28-02-2013 | US 2013054304 A1 | | 28-02-2013 |
| | | | US 2014136369 A1 | | 15-05-2014 |

EPO FORM P0459

For more details about this annex : see Official Journal of the European Patent Office, No. 12/82